# EUROPÄISCHE PATENTSCHRIFT

(11) **EP 3 271 164 B1**
(45) Veröffentlichungstag und Bekanntmachung des Hinweises auf die Patenterteilung: **11.08.2021**
(21) Anmeldenummer: 16700603.0
(22) Anmeldetag: 14.01.2016
(51) Int. Cl.: B29D 29/08

(54) **VORRICHTUNG UND VERFAHREN ZUR HERSTELLUNG EINER GUMMIRAUPENKETTE MIT ZUGTRÄGERN**
DEVICE AND METHOD FOR PRODUCING A RUBBER CATERPILLAR TRACK WITH TENSILE MEMBERS
DISPOSITIF ET PROCÉDÉ SERVANT À FABRIQUER UNE CHENILLE EN CAOUTCHOUC POURVUE D'ARMATURES DE RENFORCEMENT EN TRACTION

(30) Priorität: 20.03.2015 DE 102015205071
(43) Veröffentlichungstag der Anmeldung: 24.01.2018
(73) Patentinhaber: ContiTech Transportbandsysteme GmbH, 30165 Hannover (DE)
(72) Erfinder: HÜLS, Achim, 30890 Barsinghausen (DE); BEHRENS, Carsten, 37434 Bilshausen (DE)
(74) Vertreter: Continental Corporation
(86) Internationale Anmeldenummer: PCT/EP2016/050636
(87) Internationale Veröffentlichungsnummer: WO 2016/150580

(56) Entgegenhaltungen:
- EP-A1- 1 075 385
- JP-A- 2008 296 463
- US-A- 2 381 395
- US-A- 3 934 968
- US-A- 4 984 976
- US-A1- 2004 058 767

## Beschreibung

Die Erfindung betrifft eine Vorrichtung zur Herstellung einer Gummiraupenkette mit Zugträgern gemäß dem Oberbegriff des Anspruchs 1 sowie ein Verfahren zur Herstellung einer Gummiraupenkette unter Verwendung einer derartigen Vorrichtung gemäß dem Anspruch 5.

Als Antriebsmechanismen für Landfahrzeuge sind u.a. Raupenketten bekannt. Diese können nicht nur im militärischen Bereich sondern auch bei landwirtschaftlichen Fahrzeugen sowie anderen Fahrzeugen für die Fortbewegung in unwegsamem Gelände genutzt werden. Raupenketten weisen üblicherweise an ihrer Innenseite, vorzugsweise mittig, nach innenragende Zahnelemente auf, mittels derer die Raupenkette von einem Antriebsrad oder dergleichen des Fahrzeugs erfasst und fortbewegt werden kann. An ihrer Außenseite weisen Raupenketten üblicherweise eine Profilierung auf, um auf dem Untergrund besser Halt finden zu können. Diese Profilierung kann ähnlich wie bei z.B. einem Traktorreifen beschaffen sein, d.h. die Profilierung kann balkenförmige radiale Erhebungen aufweisen, die schräg zur Laufrichtung der Raupenkette auf dieser angeordnet sind. Die innenliegenden Zahnelemente und die außenliegenden Profilierungselemente sind üblicherweise durch einen Raupenkettenkörper verbunden, der endlos geschlossen ist.

Raupenketten können aus Gummi hergestellt sein und dann als Gummiraupenketten bezeichnet werden. Raupenketten können endlos geschlossen oder auch offen hergestellt werden. Sie können einen Zugträger zur Übertragung von Zugkräften z.B. in Form von Stahlseilen aufweisen, der in Laufrichtung mehrfach umlaufend angeordnet sein kann. Es können Querarmierungen vorhanden sein, die die Kräfte in der Breite der Raupenkette übertragen helfen können. Die Zugträger und bzw. oder Querarmierungen sind üblicherweise im Raupenkettenkörper eingeschlossen, z.B. einvulkanisiert.

Zur Herstellung von Gummiraupenketten ist es z.B. aus der EP 1 075 385 B1 bekannt, in entsprechende Aussparungen einer zylindrischen Innenform unvulkanisierte Gummielemente einzulegen, die später die Innenzähne der Gummiraupenkette bilden sollen. Über die unvulkanisierten Innenzähne bzw. die Außenfläche der Innenform wird dann der Raupenkettenkörper aus unvulkanisiertem Gummi mit dort eingebetteten Zugträgern aufgebracht, z.B. durch Wickeln. Dabei wird der Raupenkettenkörper radial nach außen so dick aufgebaut, dass aus dem radial äußeren unvulkanisierten Material die außenseitige Profilierung geformt werden kann. Dies geschieht dadurch, dass eine zylindrische Außenform, welche an ihrer Innenseite die Außenkontur der Profilierung aufweist, und die unvulkanisierte Gummiraupenkette aneinander gepresst werden, so dass sich das außenliegende unvulkanisierte Material zur Profilierung verformt. Dann erfolgt die Vulkanisation innerhalb der Presse.

Bei der Herstellung einer Gummiraupenkette gemäß der EP 1 135 248 B1 werden die Innenzähne als unvulkanisierte Gummielemente ausgebildet und in die entsprechenden Aussparungen einer zylindrischen Innenform eingelegt. Der übrige Körper der Gummiraupenkette wird separat unvulkanisiert aufgebaut und dann auf die Innenform aufgelegt. Durch Zusammenpressen der Innenform und Außenform werden die Innenzähne von Innen an den Körper der Gummiraupenkette gepresst und auf der Außenseite der Gummiraupenkette die äußeren Formsegmente durch Druck ausgebildet. Dann erfolgt die Vulkanisation innerhalb der Presse. Die Innenform und die Außenform ist dabei segmentiert aufgebaut, wobei die Segmente anfänglich in Umfangsrichtung zueinander beabstandet angeordnet sind und im Rahmen der Vulkanisation zusammengedrückt werden, so dass sie eine zylindrische geschlossene Form ergeben.

Nachteilig ist bei beiden zuvor beschriebenen Verfahren, dass die Außenkontur der Gummiraupenkette durch Pressen des unvulkanisierten Körpers der Gummiraupenkette ausgebildet wird. Da jedoch die Zugträger im unvulkanisierten Körper der Gummiraupenkette angeordnet sind und durch das Pressen des unvulkanisierten Materials dieses fast ausschließlich im radial äußeren Bereich des Körpers der Gummiraupenkette verformt wird, kann es hierdurch zu einer Verlagerung der Zugträger aus ihrer ursprünglichen Anordnung kommen. Auf diese Weise können die Zugträger nach der Vulkanisation nicht mehr in Umfangsrichtung gestreckt und in der neutralen Phase angeordnet sein, wodurch ihre Wirkung der Zugkraftübertragung in Längsrichtung der Gummiraupenkette eingeschränkt sein kann. Dies kann zu einem Reißen der Gummiraupenkette führen und die Lebensdauer der Gummiraupenkette reduzieren.

Die DE 25 17 430 A1 betrifft eine Form bzw. ein Verfahren zur Herstellung von Doppelzahnriemen. Eine Innenform mit Aussparungen an seiner Außenseite zur Ausbildung der Innenzähne des Doppelzahnriemens wird hier als Dorn bezeichnet. Die Außenform ist segmentiert ausgebildet, wobei jedes Segment zwei Zahnhälften und die Lücke zwischen zwei benachbarten Zähnen der Außenzähne ausbilden kann. Die Segmente werden mittels eines verformbaren Mantels zusammengehalten und können auch hierdurch zusammengedrückt werden, um eine in Umfangsrichtung geschlossene Außenform zu bilden. Die Segmente weisen seitlich hervorragende Zapfen auf, mit denen sie in radialer Richtung gegenüber der Innenform in dort ausgebildeten radialen Langlöchern geführt werden können. Die Aussparungen zur Ausbildung der Innenzähne sowie der Außenzähne sind gleichgroß ausgebildet.

Zur Ausbildung eines Doppelzahnriemens wird der in Umfangsrichtung endlos geschlossene Körper des Doppelzahnriemens auf der Außenoberfläche der Innenform aufgebaut, wobei auch hier Zugträger im Körper des Doppelzahnriemens angeordnet werden. Dann werden die Segmente der Außenform durch den Mantel zusammengezogen und die Außenform hierdurch geschlossen. Durch das Schließen der Form wird das eingeschlossene elastomere Material durch interne Strömungsvorgänge unter Druck in die Aussparungen der Innenform und Außenform gepresst und hierdurch die Zähne des Doppelzahnriemens ausbildet. Dann erfolgt die Vulkanisation innerhalb der Presse. Dabei kann überschüssiges elastomeres Material bzw. eingeschlossene Luft aufgrund des Druckes durch die Ritzen, die sich zwischen den Segmenten bilden, entweichen, weshalb diese Aufteilung der Segmentierung aufgrund des Verfahrens zu wählen ist.

Bei diesem Herstellungsprozess ist eine Verlagerung der Zugträger auch möglich, jedoch zumindest dann nicht zu erwarten, falls die Innenzähne und Außenzähne etwa gleichgroß ausgebildet sind, so dass das eingepresste Elastomermaterial relativ zur Lage der Zugträger gleichmäßig nach radial innen und radial außen gedrückt und hierdurch die Lage der Zugträger nicht bzw. nicht wesentlich verändert wird.

Dies gilt jedoch nur bei im Wesentlichen gleichgroßen Innenzähnen und Außenzähnen bzw. gleichgroßen Aussparungen der Innenform und Außenform zur Ausbildung dieser, weil sich nur dann der Druck des elastomeren Materials gleichmäßig verteilen kann. Somit ist das Verfahren der DE 25 17 430 A1 nur mit den hinsichtlich der EP 1 075 385 B1 und der EP 1 135 248 B1 beschriebenen Nachteilen auf die Herstellung von Gummiraupenketten anwendbar, weil bei einer Gummiraupenkette vergleichsweise kleine Innenzähne und vergleichsweise große äußere Profile ausgebildet werden. Ferner sind die Innenzähne im Allg. in einem schmalen mittigen Bereich angeordnet und die äußeren Profile erstrecken sich über die gesamte Breite der Gummiraupenkette, meist sogar schräg zur Laufrichtung.

Somit würde ein Einpressen eines elastomeren Materials in eine Form der DE 25 17 430 A1, die zur Herstellung von Gummiraupenketten verwendet werden soll, zu einem sehr starken Verlagern der Zugträger aus ihrer ursprünglichen Anordnung mit den entsprechenden Nachteilen führen. Diese Verlagerung der Zugträger wäre sogar noch stärker als bei den Herstellungsverfahren der EP 1 075 385 B1 und der EP 1 135 248 B1, weil dort beim Zusammenpressen der beiden Formen bereits elastomeres Material in den Aussparungen vorhanden ist, bei der DE 25 17 430 A1 dieses jedoch erst noch unter Druck in die Aussparungen der beiden Formen eingepresst werden muss, was die Wahrscheinlichkeit bzw. das Maß der Verlagerung der Zugträger deutlich erhöht.

Auch sind die Zähne eines Doppelzahnriemens mit ca. 3 bis 5 mm radialer Höhe deutlich geringer ausgebildet als die Zähne einer Gummiraupenkette bzw. für landwirtschaftliche Fahrzeuge. Hier können die Zähne eine radiale Höhe von z.B. 70 mm aufweisen. Somit würden bei der Anwendung des Verfahrens der DE 25 17 430 A1 auf eine Gummiraupenkette auch viel größere Fließwege des eingepressten elastomeren Materials auftreten, wodurch auch eine stärkere Verlagerung der Zugträger auftreten könnte.

Die US 2,381,395 A beschreibt eine Form zur Verwendung beim Vulkanisieren einer endlosen Lauffläche eines Kettenfahrzeugs mit einer inneren Umfangsreihe von Formsegmenten und mit einer Außenumfangsreihe von Formsegmenten, wobei die Lauffläche zwischen den zwei Serien geformt und vulkanisiert ist. Die Segmente sind nur in einer horizontalen Richtung durch Drehen der Schrauben bewegbar, aber die Segmente sind sowohl horizontal als auch vertikal bewegbar, werden durch Drehen der Schrauben horizontal bewegt und sind vertikal bewegbar, weil Lager, in denen die Schrauben arbeiten, mit Schäften ausgebildet sind, die verschiebbar in Kästen in Halterungen aufgenommen sind, die alle Segmente tragen. Die Segmente sind vertikal bewegbar, da sie Keilsegmente sind, und bis sie radial zurückgezogen und durch den Hubmechanismus nach oben gezogen worden sind, können die Segmente nicht vollständig zurückgezogen werden.

Die JP 2008296463 A beschreibt eine Vorrichtung, um das Herabfallen eines Vorformlings zu verhindern, der an einem Gehäuseaussparungsteil einer äußeren Umfangsfläche der Form angeordnet ist, wenn eine Gummiraupenkette hergestellt wird. Mehrere vertiefte Gehäuseteile sind in festen Abständen in Umfangsrichtung auf der äußeren Umfangsfläche der trommelförmigen Form ausgebildet. Nachdem die Vorformlinge zur Bildung eines Antriebsvorsprungs jeweils an diesen vertieften Gehäuseteilen angeordnet sind, wird ein Gummifolienelement über eine gesamte äußere Umfangsfläche der Form aufgewickelt, dann wird das Gummifolienelement über seinen gesamten Umfang von außen in einer radialen Richtung mit Druck beaufschlagt und das Gummifolienelement und der Vorformling werden durch Erhitzen in einem Zustand vulkanisiert, in dem eine innere Umfangsfläche des Gummifolienelements in engen Kontakt mit dem Vorformling gebracht wird, um die Gummiraupenkette zu bilden. In dieser Herstellungsvorrichtung der Gummiraupenkette ist ein Fallschutzabschnitt des Vorformlings an dem vertieften Gehäuseteil vorgesehen.

Die vulkanisierte Lauffläche weist zwei beabstandete Gummistreifen auf, die durch gespannte Drahtwindungen verstärkt und durch Metalleinsätze überbrückt sind. Vor der Vulkanisation wird die Anordnung auf einem Dorn aufgebaut, der einen endlosen Metallring und bogenförmige Ende-an-Ende-Ringsegmente aufweist, die einen Teil der Formflächen bilden. Der Dorn mit seiner Anordnung wird dann zwischen den Segmenten angeordnet, wobei die vorstehenden Teile des Dorns in Nuten in den Segmenten aufgenommen werden und der Dorn durch Stifte an den Segmenten positioniert wird. Die Segmente werden dann radial nach außen bewegt, um in die Anordnung einzugreifen. Dann werden die Segmente abgesenkt und radial nach außen bewegt, und schließlich werden die Segmente radial nach innen bewegt. Schrauben können die Segmente sicherer zusammenklemmen. Die Segmente haben Dampfmäntel. Überschüssiger Gummi wird in einer Nut in einer Segmenthalteplatte aufgenommen.

Eine Aufgabe der vorliegenden Erfindung ist es daher, eine Vorrichtung bzw. ein Verfahren zur Herstellung einer Gummiraupenkette mit Zugträgern der eingangs beschriebenen Art bereit zu stellen, so dass Gummiraupenketten mit Zugträgern einfach und kostengünstig hergestellt werden können, ohne dass sich bei der Herstellung eine Verlagerung der Zugträger ergeben kann. Wenigstens soll die Verlagerung der Zugträger reduziert werden können.

Die Aufgabe wird erfindungsgemäß durch eine Vorrichtung zur Herstellung einer Gummiraupenkette mit Zugträgern mit den Merkmalen gemäß Anspruch 1 sowie ein Verfahren zur Herstellung einer Gummiraupenkette mit den Merkmalen gemäß Anspruch 5 gelöst. Vorteilhafte Weiterbildungen sind in den Unteransprüchen beschrieben.

Somit betrifft die vorliegende Erfindung eine Vorrichtung zur Herstellung einer Gummiraupenkette mit Zugträgern gemäß dem Oberbegriff des Anspruchs 1 die dadurch gekennzeichnet ist, dass die Außenformsegmente jeweils an ihrer radialen Innenseite eine Aussparung zur Aufnahme eines unvulkanisierten Formelements für Außenzähne aufweisen.

Der Erfindung liegt die Erkenntnis zugrunde, dass die Außenzähne einer Gummiraupenkette mit Hilfe von profilierten Formelementen einfacher und günstiger herzustellen sind als die außenseitige Profilierung aus dem unvulkanisierten Material des Körpers der Gummiraupenkette zu pressen. Diese Herstellung identischer Formelemente für einen Typ von Gummiraupenkette kann in großer Stückzahl und damit kostengünstig erfolgen.

Vorteilhaft ist auch, dass durch den Aufbau der zu vulkanisierenden Gummiraupenkette aus Formelementen als Zähne der Pressdruck auf ein Minimum reduziert und durch einen Mantel im Autoklaven erzielt werden kann. Die Vulkanisation kann daher in einem Autoklaven erfolgen, was die Herstellungskosten deutlich reduzieren kann.

Vorteilhaft ist insbesondere, dass durch den Verzicht auf ein Pressen der Formteile bzw. Drücken des elastomeren Materials in die Form eine Verlagerung der Zugträger durch die forminternen Strömungen des elastomeren Materials verringert bzw. vermieden werden kann. Hierbei werden unter Zugträgern sowohl die endlos gewickelten geschlossenen Stahlseile in Laufrichtung der Gummiraupenkette als auch Querarmierungen etc. in Querrichtung verstanden. Dies kann die Haltbarkeit und Langlebigkeit der Gummiraupenkette verbessern.

Die Außensegmente können dabei miteinander zu einer in Umfangsrichtung verlaufenden und geschlossenen Kette zusammengesetzt oder auch einzeln und lose in Umfangsrichtung und bzw. oder seitlich nebeneinander angeordnet sein. Die Außensegmente können dabei jeweils in der Breite durchgängig oder nur abschnittsweise ausgebildet sein, so dass mehrere Außensegmente seitlich nebeneinander die Breite des Körpers der Gummiraupenkette abdecken können. Es können identische Außensegmente oder unterschiedliche Außensegmente miteinander verwendet werden, so dass sich die Gestaltung der Profilierung der Außenzähne auf diese Weise gestalten lässt.

Gemäß einem Aspekt der vorliegenden Erfindung können die Außenformsegmente von einem verformbaren Mantel in Umfangsrichtung zusammengehalten und von radial außen zusammengepresst werden. Hierdurch können die Außenformsegmente zueinander in Position gehalten werden. Auch kann über den Mantel Druck auf die Außenformsegmente ausgeübt werden.

Gemäß einem weiteren Aspekt der vorliegenden Erfindung sind die Außenformsegmente gegenüber der Innenform radial beweglich gelagert. Dies ermöglicht eine Beweglichkeit der Außenformsegmente beim Anpressen durch den Mantel nach radial innen. Ferner können so Fertigungsunterschiede der einzelnen Formelemente ausgeglichen werden.

Gemäß der vorliegenden Erfindung weisen die Außenformsegmente nach radial außen eine Öffnung auf. Diese Öffnung dient dem Druckausgleich beim Zusammenpressen der Außenformsegmente, d.h. durch die Öffnung kann das unvulkanisierte Material der Formelemente für Außenzähne nach radial außen austreten, falls dies erforderlich ist. Die radiale Außenfläche des Formelements kann sich dann innenseitig an den Mantel andrücken, so dass diesem Austritt eine Grenze gesetzt ist. Dieser radiale Überstand der vulkanisierten Außenzähne hat auf die Qualität der Gummiraupenkette keinen Einfluss, weil sich diese Seite der Gummiraupenkette bei der Verwendung abnutzt und der Überstand damit abgetragen wird.

Diese Öffnung ist vorzugsweise flächig ausgestaltet, um Bewegungen im elastomeren Material anders als in radialer Richtung zu vermeiden, weil hierdurch eine Verlagerung der Zugträger erfolgen könnte.

Gemäß einem weiteren Aspekt der vorliegenden Erfindung entspricht die Öffnung im Wesentlichen der radial äußeren Fläche eines unvulkanisierten Formelements für Außenzähne. Hierdurch können Bewegungen im elastomeren Material anders als in radialer Richtung vermieden werden.

Die vorliegende Erfindung betrifft auch ein Verfahren zur Herstellung einer Gummiraupenkette unter Verwendung einer Vorrichtung wie zuvor beschrieben mit den Schritten gemäß Anspruch 6. Hierdurch können die Vorteile der erfindungsgemäßen Vorrichtung bei der Herstellung von Gummiraupenketten genutzt werden.

Ein Ausführungsbeispiel und weitere Vorteile der Erfindung werden nachstehend im Zusammenhang mit den folgenden Figuren erläutert. Darin zeigt:
- Fig. 1: eine perspektivische schematische Darstellung einer erfindungsgemäßen Vorrichtung ohne Gummiraupenkette;
- Fig. 2: die Ansicht der Fig. 1 mit eingesetzten unvulkanisierten Formelementen für Innenzähne und unvulkanisiertem Körper der Gummiraupenkette;
- Fig. 3: die Ansicht der Fig. 2 mit aufgesetzten unvulkanisierten Formelementen für Außenzähne;
- Fig. 4: die Ansicht der Fig. 3 mit Außenformsegmenten;
- Fig. 5: die Ansicht der Fig. 4 mit aufgesetztem beabstandeten Mantel; und
- Fig. 6: die Ansicht der Fig. 5 mit zusammengezogenem Mantel.

Die erfindungsgemäße Vorrichtung weist eine Innenform 1 auf, welche zylindrisch ausgebildet ist und sich in einer Breite B und einer Umfangsrichtung U erstreckt. Die Innenform 1 besitzt einen zylindrischen Dorn 10, auf dessen Außenfläche in radialer Richtung R seitlich mittig eine Mehrzahl von Aussparungen 11 zur Aufnahme von unvulkanisierten Formelementen für Innenzähne 30 einer Gummiraupenkette 3 ausgebildet sind. Die radiale Außenfläche des Dorns 10 wird seitlich in der Breite B durch Seitenbegrenzungen 12 begrenzt, die jeweils radiale Langlöcher 13 aufweisen.

Die erfindungsgemäße Vorrichtung weist ferner eine Außenform 2 auf, welche eine Mehrzahl von Außenformsegmenten 21 aufweist, die gemeinsam eine zylindrische Anordnung bilden. Die Außenformsegmente 21 werden von einem verformbaren Mantel 20 von radial außen gehalten und können von diesem nach radial innen zusammengedrückt werden. Jedes Außenformsegment 21 weist eine Aussparung 22 auf, die der Kontur eines unvulkanisierten Formelements für einen Außenzahn 31 entspricht. Dabei sind die Außenformsegmente 21 nach radial außen flächig offen ausgebildet, so dass die Außenfläche des unvulkanisierten Formelements für einen Außenzahn 31 aus dieser Öffnung 24 nach radial außen ragen und dort mit der Innenfläche des Mantels 20 in Kontakt kommen kann.

Zur Führung der Außenformsegmente 21 weisen diese jeweils Führungselemente 23 in Form von Zapfen 23 auf, die sich in der Breite B von den Außenformsegmenten 21 erstrecken und in die radialen Langlöcher 13 der Seitenbegrenzungen 12 eingreifen. Hierdurch werden die Außenformsegmente 21 an einer Bewegung in Umfangsrichtung U gehindert und damit in dieser Richtung positioniert. In radialer Richtung R ist jedoch eine Beweglichkeit innerhalb der Langlöcher 13 gegeben, so dass ein Höhenausgleich in radialer Richtung R erfolgen kann.

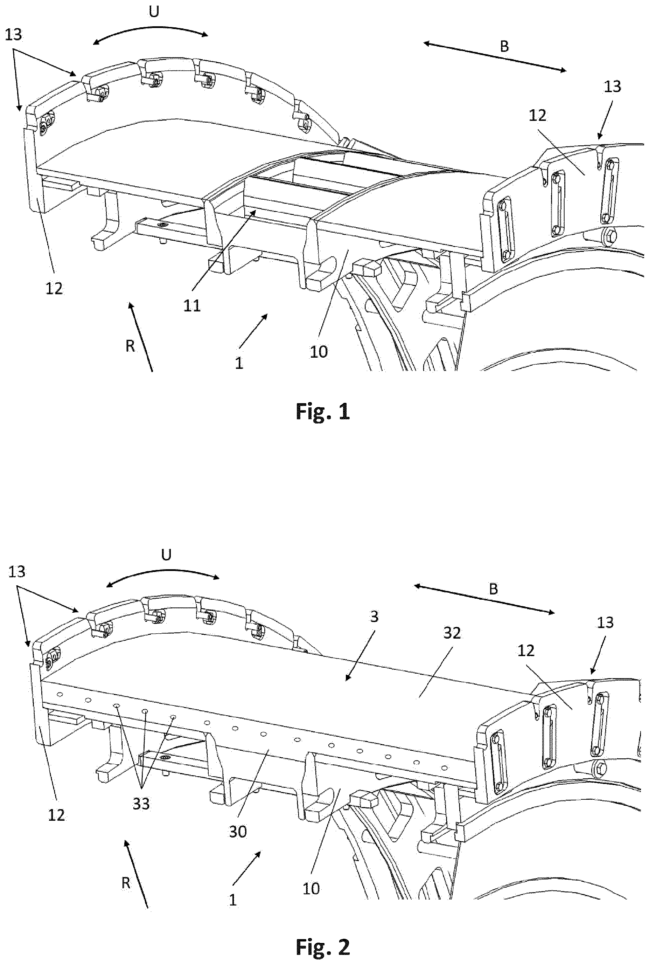

Mittels der erfindungsgemäßen Vorrichtung kann eine Gummiraupenkette 3 mit Zugträgern 33 nun wie folgt hergestellt werden:
In die Aussparungen 11 der Innenform 10 (siehe Fig. 1) werden die unvulkanisierten Formelemente für Innenzähne 30 eingesetzt, so dass sie diese ausfüllen und radial außenseitig möglichst bündig mit der Außenfläche des Dorns 10 abschließen. Auf dieser Außenfläche des Dorns 10 wird dann der unvulkanisierte Körper 32 der Gummiraupenkette 3 aus Schichten von elastomeren Material sowie dort eingebetteter Zugträger 33 aufgebaut, so dass die unvulkanisierten Formelemente für Innenzähne 30 und der unvulkanisierte Körper 32 einander flächig möglichst vollständig berühren (siehe Fig. 2).

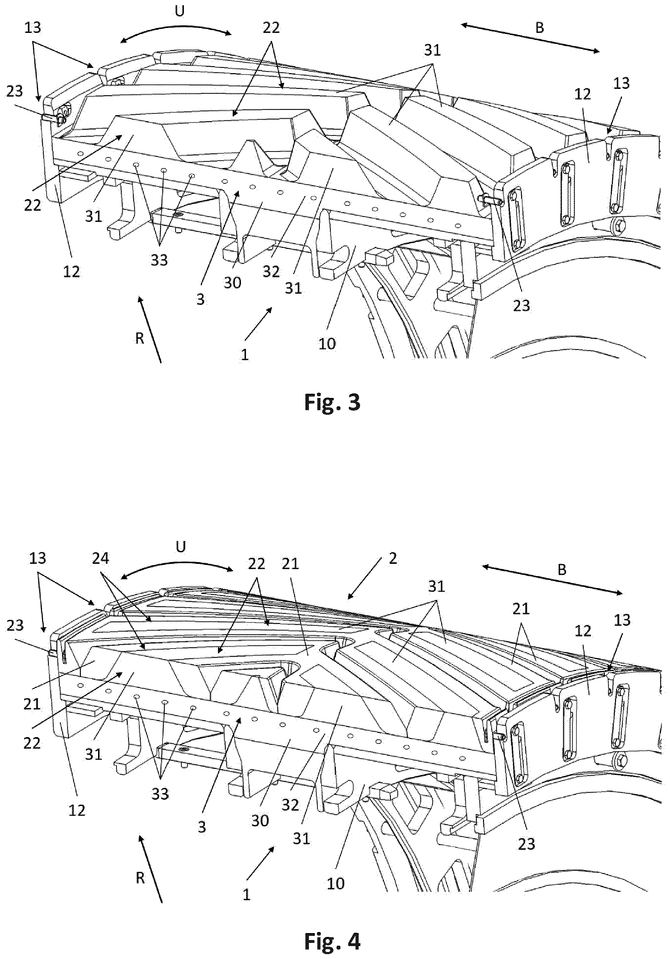

Parallel werden die Außenformsegmente 21 zu einer Kette entsprechend des Umfangs der Außenfläche des unvulkanisierten Körpers 32 der Gummiraupenkette 3 zusammengesetzt und die unvulkanisierten Formelemente für Außenzähne 31 in die Aussparungen 22 eingefügt. Diese Kette von Außenformsegmenten 21 wird dann auf den unvulkanisierten Körper 32 der Gummiraupenkette 3 aufgerollt, so dass die Zapfen 23 in die radialen Langlöcher 13 eingreifen (siehe Fig. 3 und 4).

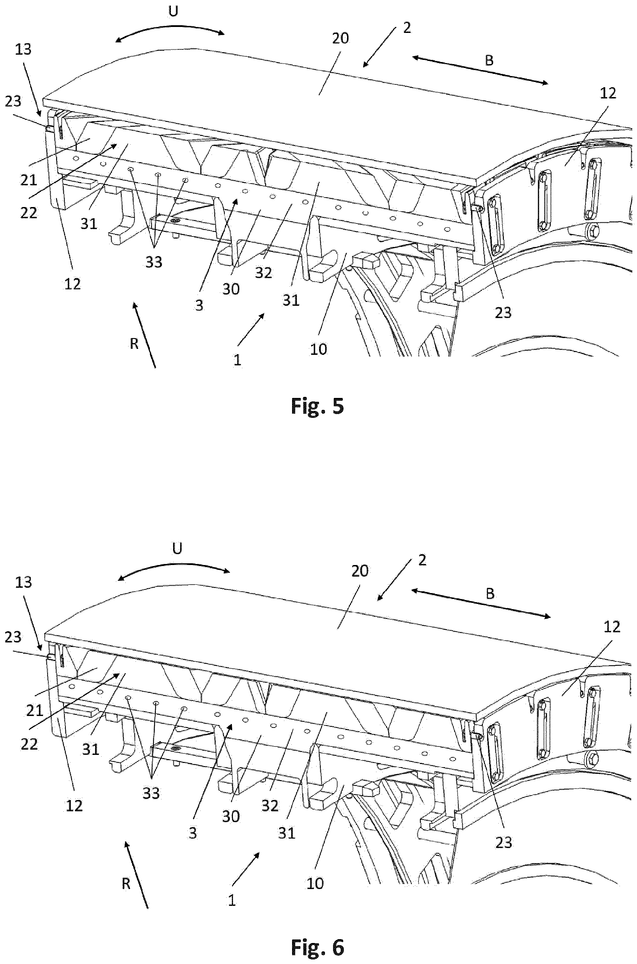

Dann wird der Mantel 20 um die Außenformsegmente 21 herum gelegt (siehe Fig. 5) und anschließend zusammengezogen (siehe Fig. 6), so dass die unvulkanisierten Formelemente für Innenzähne 30, der unvulkanisierte Körper 32 der Gummiraupenkette 3 und die unvulkanisierten Formelemente 31 für Außenzähne radial aneinander gedrückt und in diesem Zustand gehalten werden. Dabei kann elastomeres Material der unvulkanisierten Formelemente der Außenzähne 31 durch die Öffnungen 24 der Außenformsegmente 21 nach radial außen gegen die Innenseite des Mantels 20 gedrückt werden, um Abweichungen der Formelemente der Außenzähen 31 auszugleichen.

In diesem Zustand kann die unvulkanisierte Gummiraupenkette 3 vulkanisiert werden, wobei dies in einem Autoklaven erfolgen kann, weil gemäß der erfindungsgemäßen Vorrichtung bzw. des entsprechenden Verfahrens kein hoher Druck zur Formgebung der Gummiraupenkette 3 auf die unvulkanisierten Elemente 30, 31, 32 ausgeübt werden muss. Auch ist kein Einpressen von unvulkanisiertem Material in die Form 1, 2 erforderlich. Hierdurch kann vermieden werden, dass es durch forminterne Strömungen des elastomeren Materials zu Verlagerungen der Zugträger 33 kommen kann, was diese aus der gewünschten Lage wie der neutralen Phase bringen könnte.

Vielmehr werden erfindungsgemäß die unvulkanisierten Elemente 30, 31, 32 durch den Druck des Mantels 20 lediglich soweit zusammengedrückt, dass die Kontaktflächen zueinander während der Vulkanisation sicher zusammengefügt bleiben und so durch die Vulkanisation stoffschlüssig verbunden werden können. Dieser Druck des Mantels 20 ist jedoch zu gering, um in den vorgeformten unvulkanisierten Elemente 30, 31, 32 forminterne Strömungen des elastomeren Materials und hierdurch größere Verlagerungen der Zugträger 33 bewirken zu können, weshalb diese erfindungsgemäß vermieden werden können.

### Bezugszeichenliste

### (Teil der Beschreibung)

- B: Breite
- R: radiale Richtung, Radius
- U: Umfangsrichtung

- 1: Innenform
- 10: Dorn
- 11: Aussparungen des Dorns 10
- 12: Seitenbegrenzung
- 13: radiale Langlöcher der Seitenbegrenzung 12

- 2: Außenform
- 20: Mantel
- 21: Außenformsegmente, Mantelsegmente
- 22: Aussparungen der Außenformsegmente 21
- 23: Führungselemente bzw. Zapfen der Außenformsegmente 21
- 24: Öffnungen der Außenformsegmente 21

- 3: Gummiraupenkette
- 30: unvulkanisierte Formelemente für Innenzähne, Zahnstollen, Innenzähne
- 31: unvulkanisierte Formelemente für Außenzähne, Profilstollen, Außenzähne, Profilierung
- 32: unvulkanisierter Körper der Gummiraupenkette 3
- 33: Zugträger

## Patentansprüche

1. Vorrichtung zur Herstellung einer Gummiraupenkette (3) mit Zugträgern (33), mit einer zylindrischen Innenform (1) zur Ausbildung der innenseitigen Kontur der Gummiraupenkette (3),
wobei die Innenform (1) einen zylindrischen Dorn (10) aufweist, der an seiner radialen Außenseite in Umfangsrichtung (U) eine Mehrzahl von Aussparungen (11) zur Aufnahme von unvulkanisierten Formelementen für Innenzähne (30) aufweist, und
einer zylindrischen Außenform (2) zur Ausbildung der außenseitigen Kontur der Gummiraupenkette (3),
wobei die Außenform (2) in Umfangsrichtung (U) eine Mehrzahl von Außenformsegmenten (21) aufweist,
wobei die Außenformsegmente (21) jeweils an ihrer radialen Innenseite eine Aussparung (22) zur Aufnahme eines unvulkanisierten Formelements für Außenzähne (31) aufweisen,
**dadurch gekennzeichnet, dass**
wobei die Außenformsegmente (21) nach radial außen eine Öffnung (24) aufweisen.

2. Vorrichtung nach Anspruch 1,
wobei die Außenformsegmente (21) von einem verformbaren Mantel (20) in Umfangsrichtung (U) zusammengehalten und von radial außen zusammengepresst werden können.

3. Vorrichtung nach Anspruch 1 oder 2,
wobei die Außenformsegmente (21) gegenüber der Innenform (1) radial beweglich gelagert sind.

4. Vorrichtung nach einem der vorangehenden Ansprüche,
wobei die Öffnung (24) im Wesentlichen der radial äußeren Fläche eines unvulkanisierten Formelements für Außenzähne (31) entspricht.

5. Verfahren zur Herstellung einer Gummiraupenkette (3) unter Verwendung einer Vorrichtung nach einem der vorherigen Ansprüche, mit den Schritten:
Einbringen von unvulkanisierten Formelementen für Innenzähne (30) in die entsprechenden Aussparungen (11) des Dorns (10) der Innenform (1),
Aufbringen eines unvulkanisierten Körpers (32) der Gummiraupenkette (3) mit Zugträgern (33) auf die Formelemente für Innenzähne (30) und die radiale Außenseite des Dorns (10),
Einbringen von unvulkanisierten Formelementen für Außenzähne (31) die in entsprechenden Aussparungen (22) der Außenform (2),
Zusammenfügen der Innenform (1) und Außenform (2), und
Vulkanisieren des Körpers (32) der Gummiraupenkette (3) mit Formelementen für Innenzähne (30) und Formelementen für Außenzähne (31).

## Claims

1. Device for producing a rubber caterpillar track (3) with tensile members (33), having
a cylindrical inner mould (1) for forming the inside contour of the rubber caterpillar track (3), wherein the inner mould (1) has a cylindrical mandrel (10) which, on its radial outer side, has a multiplicity of apertures (11) in a circumferential direction (U) for receiving unvulcanized shaped elements for internal teeth (30), and
a cylindrical outer mould (2) for forming the outside contour of the rubber caterpillar track (3), wherein the outer mould (2) has a multiplicity of outer mould segments (21) in the circumferential direction (U),
wherein the outer mould segments (21) each have, on their radial inner side, an aperture (22) for receiving an unvulcanized shaped element for external teeth (31),
**characterized in that**
the outer mould segments (21) have an opening (24) radially toward the outside.

2. Device according to Claim 1,
wherein the outer mould segments (21) can be held together in the circumferential direction (U), and pressed together from radially outside, by a deformable jacket (20).

3. Device according to Claim 1 or 2,
wherein the outer mould segments (21) are mounted so as to be radially movable relative to the inner mould (1).

4. Device according to any one of the preceding claims,
wherein the opening (24) substantially corresponds to the radially outer surface of an unvulcanized shaped element for external teeth (31).

5. Method for producing a rubber caterpillar track (3) using a device according to any one of the preceding claims, having the steps:
inserting unvulcanized shaped elements for internal teeth (30) into the corresponding apertures (11) of the mandrel (10) of the inner mould (1),
applying an unvulcanized body (32) of the rubber caterpillar track (3) with tensile members (33) to the shaped elements for internal teeth (30) and to the radial outer side of the mandrel (10),
inserting unvulcanized shaped elements for external teeth (31) into the corresponding apertures (22) of the outer mould (2),
bringing the inner mould (1) and outer mould (2) together, and
vulcanizing the body (32) of the rubber caterpillar track (3) with shaped elements for internal teeth (30) and shaped elements for external teeth (31).

## Revendications

1. Dispositif de fabrication d'une chenille en caoutchouc (3), ledit dispositif comprenant des supports à traction (33), un moule intérieur cylindrique (1) destiné à former le contour intérieur de la chenille en caoutchouc (3),
le moule intérieur (1) comportant un mandrin cylindrique (10) qui comporte, sur son côté radialement extérieur dans la direction circonférentielle (U), une pluralité d'évidements (11) destinés à recevoir des éléments moulés non vulcanisés destinés aux dents intérieures (30), et
un moule extérieur cylindrique (2) destiné à former le contour extérieur de la chenille en caoutchouc (3),
le moule extérieur (2) comportant une pluralité de segments de moule extérieur (21) dans la direction circonférentielle (U),
les segments de moule extérieur (21) comportant chacun sur leur côté radialement intérieur un évidement (22) destiné à recevoir un élément moulé non vulcanisé destiné aux dents extérieures (31),
**caractérisé en ce que**
les segments de moule extérieur (21) comportent radialement vers l'extérieur une ouverture (24).

2. Dispositif selon la revendication 1,
les segments de moule extérieur (21) pouvant être maintenus ensemble dans la direction circonférentielle (U) par une enveloppe déformable (20) et pouvant être pressés ensemble radialement depuis l'extérieur.

3. Dispositif selon la revendication 1 ou 2,
les segments de moule extérieur (21) étant montés de manière à être mobiles radialement par rapport au moule intérieur (1).

4. Dispositif selon l'une des revendications précédentes,
l'ouverture (24) correspondant sensiblement à la surface radialement extérieure d'un élément moulé non vulcanisé destiné à des dents extérieures (31).

5. Procédé de réalisation d'une chenille en caoutchouc (3) à l'aide d'un dispositif selon l'une des revendications précédentes, ledit procédé comprenant les étapes suivantes :
introduire des éléments moulés non vulcanisés destinés à des dents intérieures (30) dans les évidements correspondants (11) du mandrin (10) du moule intérieur (1),
appliquer un corps non vulcanisé (32) de la chenille en caoutchouc (3) muni de supports de traction (33) sur les éléments moulés destinés à des dents intérieures (30) et sur le côté radialement extérieur du mandrin (10),
introduire des éléments moulés non vulcanisés destinés à des dents extérieures (31) dans les évidements correspondants (22) du moule extérieur (2),
assembler le moule intérieur (1) et le moule extérieur (2), et
vulcaniser le corps (32) de la chenille en caoutchouc (3) avec des éléments moulés destinés à des dents intérieures (30) et des éléments moulés destinés à des dents extérieures (31).
